# EUROPEAN PATENT APPLICATION

(11) **EP 3 681 106 A1**
(43) Date of publication of application: **15.07.2020**
(21) Application number: 20151094.8
(22) Date of filing: 10.01.2020
(51) Int. Cl.: H04L 12/24, H04L 12/26, H04W 28/02, H04W 28/26, H04W 72/04, H04W 72/12

(54) **METHOD FOR ALLOCATING AND REQUESTING SIDELINK RESOURCES, BASE STATION AND USER DEVICE**

(30) Priority: 10.01.2019 US 201962790467 P; 31.12.2019 US 201916731071
(71) Applicant: Industrial Technology Research Institute, Hsinchu 31040 (TW)
(72) Inventor: WEI, Chun-Yi, 238 New Taipei City (TW); SHEU, Chorng-Ren, 300 Hsinchu City (TW); TSAI, Hua-Lung, 104 Taipei City (TW); TALAT, Samer T., 302 Hsinchu County (TW); HU, Heng-Ming, 320 Taoyuan City (TW)
(74) Representative: Becker, Eberhard

(57) **Abstract**

The disclosure provides a method for allocating and requesting sidelink resources, a base station and a user device. The method for allocating sidelink resources includes: receiving a request signal from each user device through a first communication interface, wherein the first communication interface belongs to a first communication system; transmitting a grant signal to each user device in response to the request signal of each user device; receiving a resource sensing result of each user device, and accordingly estimating a specific resource sensing result associated with a specific resource pool; and transmitting the specific resource sensing result to a first user device through the first communication interface to allow the first user device to perform a sidelink transmission corresponding to a second communication system.

## Description

### TECHNICAL FIELD

The disclosure relates to a communication resource allocation mechanism, and relates to a method for allocating sidelink resources, a base station, a method for requesting sidelink resources and a user device.

### BACKGROUND

PC5 interfaces are transmission interfaces for device-to-device communication. In general, PC5 interface in the fourth-generation (4G) Long Term Evolution (LTE) standard vehicle communication system (referred to as LTE-PC5) and PC5 interface in the fifth-generation (5G) New Radio (NR) standard vehicle communication system (referred to as NR-PC5) should be considered as two different interfaces.

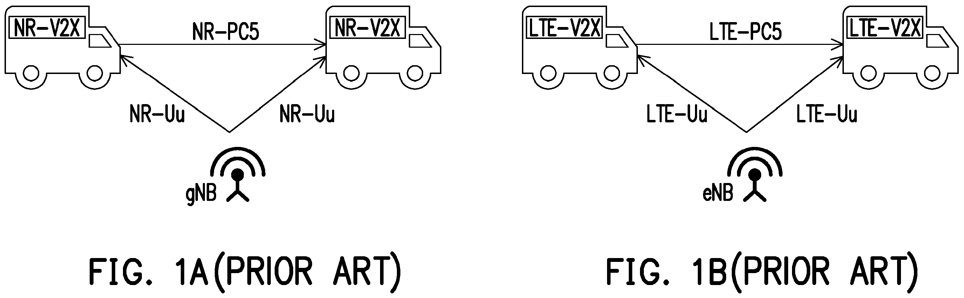

As shown FIG. 1A, NR-PC5 is used by an NR-V2X (Vehicle-to-everything) user device for device-to-device communication, and managed by an NR-Uu interface (i.e., an interface for communication between the NR-V2X user device and a 5G NR standard base station (gNB)). In addition, as shown by FIG. 1B, LTE-PC5 is used by an LTE-V2X user device for device-to-device communication, and managed by an LTE-Uu interface (i.e., an interface for communication between the LTE-V2X user device and a 4G LTE standard base station (eNB)).

In the early stage of 5G NR deployment process, because a deployment density of the gNB is still insufficient, the NR-V2X user device may leave a coverage of the gNB and need to operate at Mode 2 of the 5G vehicle communication system. In this case, the NR-V2X user device needs to perform interference management and resource allocation by itself without assistance from the gNB. On the other hand, in the late stage of 5G NR deployment process, because the deployment density of the gNB is relatively complete and the eNB is gradually withdrawing from use, the LTE-V2X user device may leave a coverage of the eNB and need to operate at Mode 4 of the 4G vehicle communication system. In this case, the LTE-V2X user device needs to perform interference management and resource allocation by itself without assistance from the eNB.

Therefore, for those skilled in the art, if it is possible to design an eNB-assisted mechanism for interference management and resource allocation of the NR-V2X user device operating at Mode 2 of the 5G vehicle communication system, or a gNB-assisted mechanism for interference management and resource allocation of the LTE-V2X user device operating at Mode 4 of the 4G vehicle communication system, performance of the overall communication system may be improved during 5G NR deployment process.

### SUMMARY

The disclosure provides a method for allocating sidelink resources, which is adapted to a base station. The method includes: receiving a request signal individually from at least one user device through a first communication interface, wherein each of the at least one user device requests to transmit a resource sensing result of each of the at least one user device for a specific resource pool to the base station through the request signal, and the first communication interface belongs to a first communication system; transmitting a grant signal to each of the at least one user device in response to the request signal of each user device; receiving the resource sensing result of each of the at least one user device, and accordingly estimating a specific resource sensing result associated with the specific resource pool, wherein the specific resource sensing result indicates at least one available resource unit in the specific resource pool; and transmitting the specific resource sensing result to a first user device through the first communication interface to allow the first user device to perform a sidelink transmission corresponding to a second communication system, wherein the first communication system is different from the second communication system, each of the at least one user device operates in the second communication system, and each of the at least one user device is located outside a coverage of another base station applying the second communication system but located within a coverage of the base station applying the first communication system.

The disclosure provides a base station, which includes a transceiver circuit and a processor. The processor is coupled to the transceiver circuit and configured to: control the transceiver circuit to receive a request signal individually from at least one user device through a first communication interface, wherein each of the at least one user device requests to transmit a resource sensing result of each of the at least one user device for a specific resource pool to the base station through the request signal, and the first communication interface belongs to a first communication system; control the transceiver circuit to transmit a grant signal to each of the at least one user device in response to the request signal of each of the at least one user device; control the transceiver circuit to receive the resource sensing result of each of the at least one user device, and accordingly estimate a specific resource sensing result associated with the specific resource pool, wherein the specific resource sensing result indicates at least one available resource unit in the specific resource pool; and control the transceiver circuit to transmit the specific resource sensing result to a first user device through the first communication interface to allow the first user device to perform a sidelink transmission corresponding to a second communication system, wherein the first communication system is different from the second communication system, each of the at least one user device operates in the second communication system, and each of the at least one user device is located outside a coverage of another base station applying the second communication system but located within a coverage of the base station applying the first communication system.

The disclosure provides a method for requesting sidelink resources, which is adapted to a user device. The method includes: transmitting a request signal to a base station through a first communication interface, wherein the request signal is configured to request to transmit a resource sensing result of the user device for a specific resource pool to the base station, and the first communication interface belongs to a first communication system; receiving a grant signal from the base station in response to the request signal through the first communication interface; transmitting the resource sensing result of the user device for the specific resource pool to the base station through the first communication interface so that the base station accordingly estimates a specific resource sensing result associated with the specific resource pool; receiving the specific resource sensing result associated with the specific resource pool from the base station through the first communication interface, wherein the specific resource sensing result indicates at least one available resource unit in the specific resource pool; and performing a sidelink transmission corresponding to a second communication system according to the at least one available resource unit, wherein the first communication system is different from the second communication system, the user device operates in the second communication system, and the user device is located outside a coverage of another base station applying the second communication system but located within a coverage of the base station applying the first communication system.

The disclosure provides a user device, which includes a transceiver circuit and a processor. The processor is coupled to the transceiver circuit and configured to: control the transceiver circuit to transmit a request signal to a base station through a first communication interface, wherein the request signal is configured to request to transmit a resource sensing result of the user device for a specific resource pool to the base station, and the first communication interface belongs to a first communication system; control the transceiver circuit to receive a grant signal from the base station in response to the request signal through the first communication interface; control the transceiver circuit to transmit the resource sensing result of the user device for the specific resource pool to the base station through the first communication interface so that the base station accordingly estimates a specific resource sensing result associated with the specific resource pool; control the transceiver circuit to receive the specific resource sensing result associated with the specific resource pool from the base station through the first communication interface, wherein the specific resource sensing result indicates at least one available resource unit in the specific resource pool; and perform a sidelink transmission corresponding to a second communication system according to the at least one available resource unit, wherein the first communication system is different from the second communication system, the user device operates in the second communication system, and the user device is located outside a coverage of another base station applying the second communication system but located within a coverage of the base station applying the first communication system.

To make the aforementioned more comprehensible, several embodiments accompanied with drawings are described in detail as follows.

### BRIEF DESCRIPTION OF THE DRAWINGS

FIG. 1A is a schematic diagram of a conventional NR vehicle communication.
FIG. 1B is a schematic diagram of a conventional LTE vehicle communication.
FIG. 2 is a flowchart of a method for allocating sidelink resources illustrated according to an embodiment of the disclosure.
FIG. 3 is a schematic diagram of a specific resource pool and a resource sensing result illustrated according to an embodiment of the disclosure.
FIG. 4 is a schematic diagram for obtaining a specific resource sensing result in a specific resource pool illustrated according to an embodiment of the disclosure.
FIG. 5A is a schematic diagram of a first application scenario illustrated according to a first embodiment of the disclosure.
FIG. 5B is a flowchart of the method for allocating sidelink resources illustrated according to FIG. 5A.
FIG. 6A is a schematic diagram of a second application scenario illustrated according to the first embodiment of the disclosure.
FIG. 6B is a flowchart of the method for allocating sidelink resources illustrated according to FIG. 6A.
FIG. 7A is a schematic diagram of a specific resource sensing result illustrated according to an embodiment of the disclosure.
FIG. 7B is a schematic diagram of a sidelink resource allocation result illustrated according to an embodiment of the disclosure.
FIG. 8A is a schematic diagram of a third application scenario illustrated according to a second embodiment of the disclosure.
FIG. 8B is a flowchart of the method for allocating sidelink resources illustrated according to FIG. 8A.
FIG. 9A is a schematic diagram of a fourth application scenario illustrated according to the second embodiment of the disclosure.
FIG. 9B is a flowchart of the method for allocating sidelink resources illustrated according to FIG. 9A.
FIG. 10A is a functional block diagram of a base station illustrated according to an embodiment of the disclosure.
FIG. 10B is a functional block diagram of a user device illustrated according to an embodiment of the disclosure.
FIG. 11 is a flowchart of a method for requesting sidelink resources illustrated according to an embodiment of the disclosure.

### DETAILED DESCRIPTION

Generally, in the early stage of 5G NR deployment process, because a deployment density of the gNB is still insufficient, the NR-V2X user device may leave a coverage of the gNB and need to operate at Mode 2 of the 5G vehicle communication system. In this case, the NR-V2X user device is only able to access a specified radio resource. In the embodiments of the disclosure, the specified radio resource above may be referred to as a first specific resource pool, which may include a plurality of first resource units distributed at specific time and frequency. Normally, the NR-V2X user device at Mode 2 first senses whether there are available resource units (i.e., resource units not yet used for transmission) in the first specific resource pool. Then, the NR-V2X user device may perform a random access on the available resource units and accordingly perform (arrange or run) a sidelink transmission (e.g., a data transmission with nearby NR-V2X user devices through the NR-PC5 interface).

In the embodiments of the disclosure, interference management and resource allocation of the NR-V2X user device at Mode 2 may be enhanced by the LTE-Uu interface. For instance, the LTE-Uu interface may help in providing reliable and accurate measurement reports corresponding to the first specific resource pool to the NR-V2X user device. Specifically, the eNB may include location information of other NR-V2X user devices near the NR-V2X user device, and the eNB may coordinate the measurement reports from all the user devices to improve resource allocation performance for an NR sidelink transmission.

Further, in the late stage of 5G NR deployment process, because the deployment density of the gNB is relatively complete and the eNB is gradually withdrawing from use, the LTE-V2X user device may leave a coverage of the eNB and need to operate at Mode 4 of the 4G vehicle communication system. In this case, the LTE-V2X user device is only able to access a specified radio resource also. In the embodiments of the disclosure, the specified radio resource above may be referred to as a second specific resource pool, which may include a plurality of second resource units distributed at specific time and frequency. Normally, for the second specific resource pool, the LTE-V2X user device at Mode 4 first senses whether there are available resource units (i.e., resource units not yet used for transmission). Then, the LTE-V2X user device may perform a random access on the available resource units and accordingly perform a sidelink transmission (e.g., a data transmission with nearby LTE-V2X user devices through the LTE-PC5 interface).

Nonetheless, in the embodiments of the disclosure, interference management and resource allocation of the LTE-V2X user device at Mode 4 may be enhanced by the NR-Uu interface. For instance, the Nu-Uu interface may help in providing reliable and accurate measurement reports corresponding to the second specific resource pool to the LTE-V2X user device. Specifically, the gNB may include location information of other LTE-V2X user devices near the LTE-V2X user device, and the gNB may coordinate the measurement reports from all the user devices to improve resource allocation performance for an LTE sidelink transmission.

Based on the above, the disclosure proposes a method for allocating sidelink resources, which may be used for allowing a base station (e.g., a eNB or a gNB) operating in a first communication system (e.g., one of LTE and NR) to assist certain user devices operating in a second communication system (e.g., another one of LTE and NR) in performing a sidelink transmission corresponding the second communication system. In the embodiments of the disclosure, the first and second communication systems may belong to different generations.

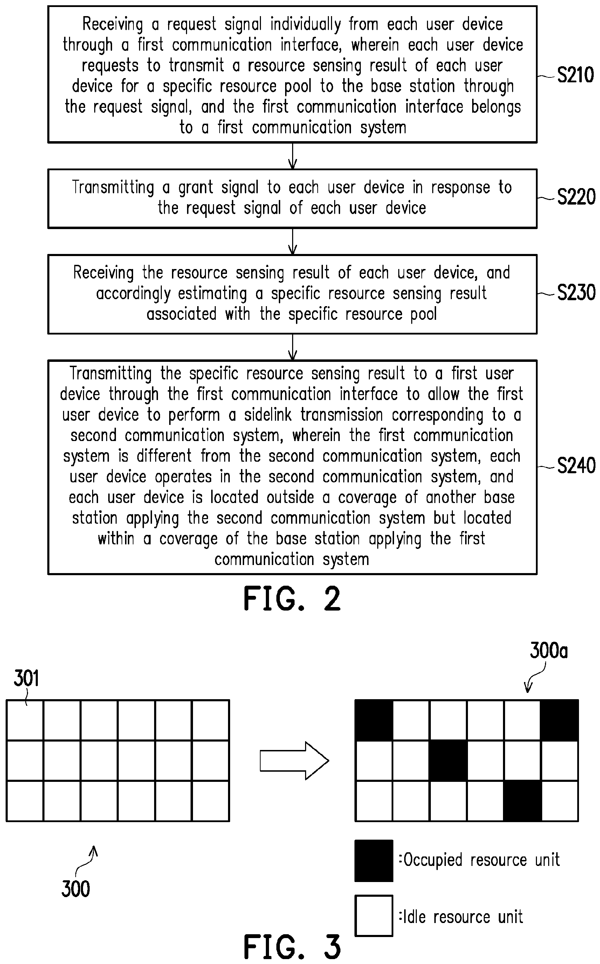

Referring to FIG. 2, which is a flowchart of a method for allocating sidelink resources illustrated according to an embodiment of the disclosure. The method of this embodiment may be executed by the base station (e.g., the eNB or the gNB) corresponding to the first communication system (e.g., one of LTE and NR). In this embodiment, it is assumed that a first user device operating in the second communication system (e.g., another one of LTE and NR) intends to perform the sidelink transmission corresponding to the second communication system, but the first user device is currently located outside a coverage of the base station corresponding to the second communication system. It is also assumed that the first user device is currently located within a coverage of the base station corresponding to the first communication system. Under this circumstance, based on the measurement reports of the user devices operating in the second communication system near the first user device, the base station corresponding to the first communication system may arrange radio resources for allowing the first user device to accordingly perform the sidelink transmission. In this embodiment, the measurement report of each user device includes, for example, a reference signal strength measured by each user device for each resource unit in the specific resource pool, but not limited thereto.

As shown by FIG. 2, in step S210, the base station may receive a request signal individually from each user device through a first communication interface. In an embodiment, each user device may request to transmit a resource sensing result of each user device for the specific resource pool to the base station through the request signal. The resource sensing result includes, for example, the reference signal strength (e.g., Reference Signal Received Power (RSRP)) of each resource unit sensed by the user device or a resource usage status indicator value corresponding to each resource unit. In an embodiment, the resource usage status indicator value is 0 or 1 to indicate that the resource unit is an idle resource unit or an occupied resource unit, In addition, the request signal may be implemented by a first radio resource control (RRC) signal in high layer transmitted to the base station by the user device or a first uplink control signal in physical layer, but not limited thereto. In addition, the first communication interface may belong to the first communication system, for example. For instance, if the first communication system is LTE, the first communication interface is, for example, the LTE-Uu interface; if the first communication system is NR, the first communication interface is, for example, the NR-Uu interface.

Next, in step S220, the base station may transmit a grant signal to each user device in response to the request signal of each user device. In an embodiment, the grant signal may be considered as that the base station has allowed the corresponding user device to return the resource sensing result obtained by sensing the specific resource pool. Further, the grant signal may be implemented by a second RRC signal in high layer transmitted to the user device by the base station or a second downlink control signal in physical layer, but not limited thereto.

In step S230, the base station may receive the resource sensing result of each user device, and accordingly estimate a specific resource sensing result associated with the specific resource pool.

Referring to FIG. 3, which is a schematic diagram of a specific resource pool and a resource sensing result illustrated according to an embodiment of the disclosure. In this embodiment, a specific resource pool 300 may include, for example, a plurality of resource units 301, wherein each resource unit 301 may include, for example, one or more resource blocks (RBs), but the disclosure is not limited thereto.

As shown by FIG. 3, after sensing the reference signal strength for each resource unit 301 in the specific resource pool 300, a particular user device may accordingly generate a resource sensing result 300a, wherein the blank resource units 301 are, for example, the idle resource units, and the marked resource units 301 are, for example, the occupied resource units.

In different embodiments, the user device may represent the resource sensing result in different ways. For example, the user device may directly inform the RSRP values of each resource unit 301 to the base station. In FIG. 3, the RSRP values sensed by the user device for the resource units 301 in the first row of the specific resource pool 300 may be expressed as, for example, {1.1, 0.3, 0.2, 0.1, 0.4, 1.4}; the RSRP values sensed by the user device for the resource units 301 in the second row of the specific resource pool 300 may be expressed as, for example, {0.2, 0.3, 1.6, 0.2, 0.4, 0.1}; and the RSRP values sensed by the user device for the resource units 301 in the third row of the specific resource pool 300 may be expressed as, for example, {0.1, 0.3, 0.2, 0.1, 1.3, 0.2}. In this case, the user device may directly inform the RSRP values as the resource sensing result to the base station.

As another example, the user device may inform location information of the occupied resource units in the specific resource pool 300 to the base station as the resource sensing result. In an embodiment, the user device may inform the coordinate information of the occupied resource units in the specific resource pool 300 to the base station. Taking FIG. 3 as an example, the coordinate information of the occupied resource units are, for example, (1, 1), (1, 6), (2, 3), and (3, 5).

In another embodiment, the user device may also indicate the idle resource units and the occupied resource units with the corresponding resource usage status indicator values, and convert the location of each resource unit in the specific resource pool 300 into a bitmap, and then inform the bitmap to the base station. In FIG. 3, it is assumed that the resource usage status indicator value of the idle resource unit is represented by 0, and the resource usage status indicator value of the occupied resource unit is represented by 1. Accordingly, the resource units 301 in the first row of the specific resource pool 300 may be expressed as the first row of the bitmap, for example, the first row of the bitmap is {1, 0, 0, 0, 0, 1}; the resource units 301 in the second row of the specific resource pool 300 may be expressed as the second row of the bitmap, for example, the second row of the bitmap is {0, 0, 1, 0, 0, 0}; and the resource units 301 in the third row of the specific resource pool 300 may be expressed as the third row of the bitmap, for example, the third row of the bitmap is {0, 0, 0, 0, 1, 0}. Then, the user device may directly inform the bitmap above as the resource sensing result to the base station, but the disclosure is not limited thereto.

In this embodiment, since each user device senses the same specific resource pool, after receiving the resource sensing result of each user device for the specific resource pool, the base station may obtain a statistical reference signal strength of each resource unit based on a specific statistical means (e.g., taking an average value or a weighted sum), or obtain a resource usage status indicator statistical value of each resource unit, so as to obtain more reliable and accurate measurement results. For instance, with respect to a particular resource unit in the specific resource pool, the base station may average the reference signal strengths sensed by all the user devices for this particular resource unit to obtain the statistical reference signal strength of this particular resource unit, but not limited thereto. As another example, with respect to a particular resource unit in the specific resource pool, the base station may average the resource usage status indicator values sensed by all the user devices for this particular resource unit to obtain the resource usage status indicator statistical value of this particular resource unit, but not limited thereto.

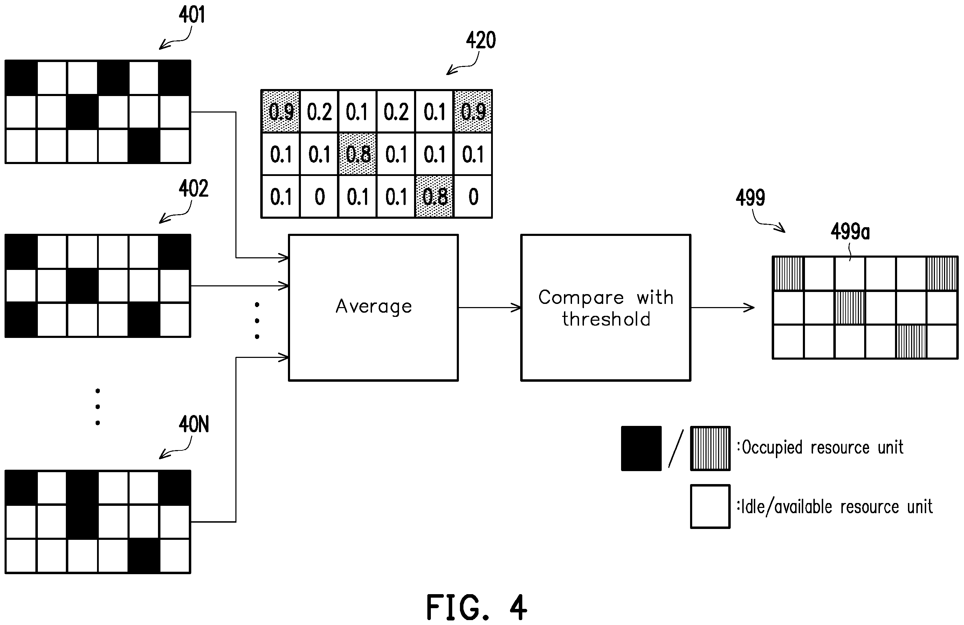

Referring to FIG. 4, which is a schematic diagram for obtaining a specific resource sensing result in a specific resource pool illustrated according to an embodiment of the disclosure. In FIG. 4, resource sensing results 401 to 40N are measurement results sensed by multiple user devices for the same specific resource pool (e.g., the specific resource pool 300 in FIG. 3). In this embodiment, after obtaining the resource sensing results 401 to 40N, the base station may obtain a statistical reference signal strength 420 (or a resource usage status indicator statistical value 420) of each resource unit in the specific resource pool according to the above teaching.

In an embodiment, after obtaining the statistical reference signal strength 420 of each resource unit through the above means, the base station may determine one or more available resource units from the specific resource pool. As shown by FIG. 4, the base station may compare the statistical reference signal strength of each resource units individually with a preconfigured reference signal strength threshold (e.g., 0.75). In this embodiment, if the statistical reference signal strength of a particular resource unit is higher than the preconfigured reference signal strength threshold, the base station may have the particular resource unit regarded as the occupied resource unit, or else regarded as the available resource unit. In different embodiments, the preconfigured reference signal strength threshold may be set by designers based on experience/requirements.

In another embodiment, after obtaining the resource usage status indicator statistical value 420 of each resource unit through the above means, the base station may determine one or more available resource units from the specific resource pool. For example, the base station may compare the resource usage status indicator statistical value of each resource unit individually with a preconfigured resource usage status indicator threshold. In this embodiment, if the resource usage status indicator statistical value of a particular resource unit is higher than the preconfigured resource usage status indicator threshold, the base station may have the particular resource unit regarded as the occupied resource unit, or else regarded as the available resource unit. In different embodiments, the resource usage status indicator threshold may be set by designers based on experience/requirements.

After obtaining information regarding the occupied resource units and the available resource units, the base station may generate a specific resource sensing result 499 associated with the specific resource pool. As shown by FIG. 4, the specific resource sensing result 499 may indicate one or more available resource units 499a (i.e., unmarked resource units).

Referring to FIG. 2 again, in step S240, the base station may transmit the specific resource sensing result to the first user device through the first communication interface to allow the first user device to perform a sidelink transmission corresponding to a second communication system, wherein the first communication system is different from the second communication system, each user device operates in the second communication system, and each user device is located outside a coverage of another base station applying the second communication system but located within a coverage of the base station applying the first communication system. In different embodiments, the base station may transmit the specific resource sensing result to the first user device in a manner similar to the user device reporting the resource sensing result (e.g., reporting the coordinate information of the available resource units, the corresponding bitmap and the like), but the disclosure is not limited thereto.

Taking FIG. 4 as an example, since the specific resource sensing result 499 may indicate the available resource units in the specific resource pool, the first user device may perform the sidelink transmission corresponding to the second communication system based on the available resource units indicated by the specific resource sensing result 499.

In order to make the above concept easier to understand, the following is a more detailed description supplemented by the first embodiment and the second embodiment.

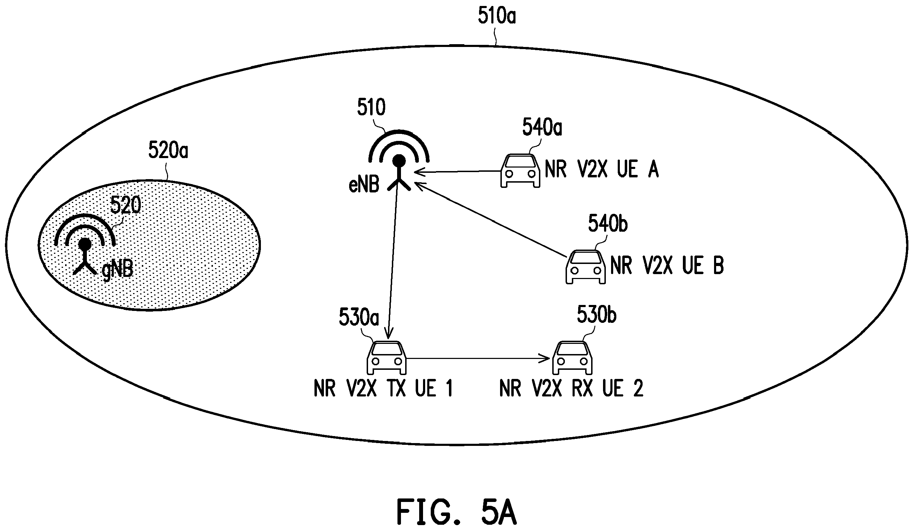

Referring to FIG. 5A, which is a schematic diagram of the first application scenario illustrated according to the first embodiment of the disclosure. In the first application scenario of the first embodiment, a base station 510 is, for example, the eNB corresponding to LTE (i.e., the first communication system) and has a coverage 510a. Further, a base station 520 is, for example, the gNB corresponding to NR (i.e., the second communication system) and has a coverage 520a.

In FIG. 5A, it is assumed that a first user device 530a intends to perform a sidelink transmission corresponding to NR (hereinafter referred to as the NR sidelink transmission), but the first user device 530a is located outside the coverage 520a of the base station 520 and unable to obtain available wireless resources arranged by the base station 520. In other words, the first user device 530a is, for example, the NR-V2X user device operating at Mode 2 of the 5G vehicle communication system. In this case, since the first user device 530a is located within the coverage 510a of the base station 510, the base station 510 may assist the first user device 530a to obtain the available resource units that can be used to perform the NR sidelink transmission by executing the method for allocating sidelink resources of FIG. 2.

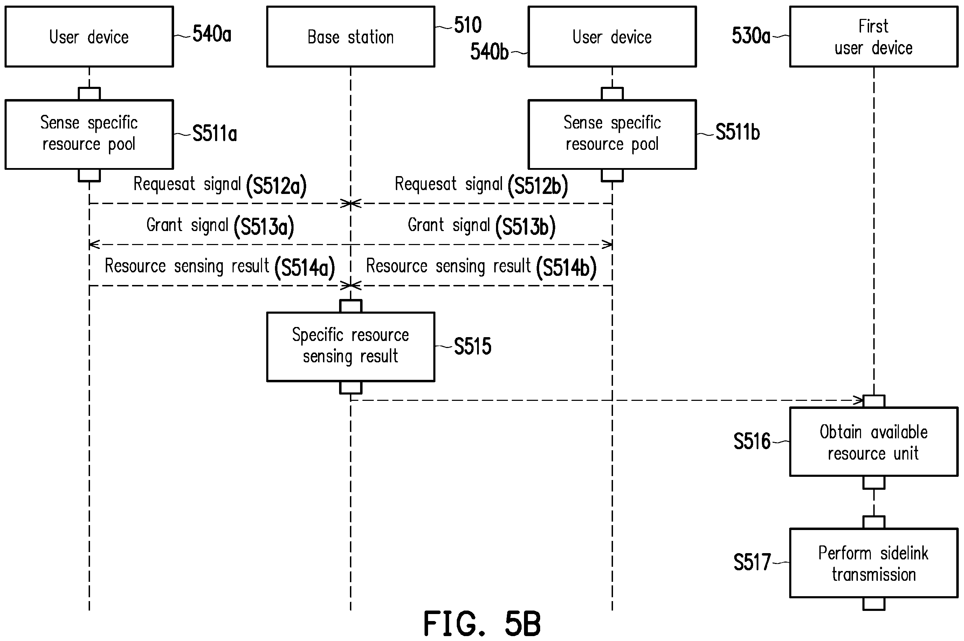

Referring FIG. 5B, which is a flowchart of the method for allocating sidelink resources illustrated according to FIG. 5A. As shown by FIG. 5B, user devices 540a and 540b may respectively perform steps S511a and S511b to sense the reference signal strength or the resource usage status indicator value of each resource unit in the specific resource pool according to the teaching of the foregoing embodiment. In the first application scenario of the first embodiment, the user devices 530b, 540a and 540b are also the NR-V2X user devices operating at Mode 2 of the 5G vehicle communication system, but not limited thereto.

Then, the user devices 540a and 540b may respectively perform steps S512a and S512b to transmit the request signal (e.g., transmitted by a first RRC signal in high layer or a first uplink control signal in physical layer) to the base station 510. In the first application scenario of the first embodiment, the user devices 540a and 540b may, for example, transmit the request signal to the base station 510 through the LTE-Uu interface (i.e., the first communication interface), but not limited thereto.

After receiving the request signal, the base station 510 may perform steps S513a and S513b to correspondingly return the grant signal (e.g., returned by a second RRC signal in high layer or a second downlink control signal in physical layer) to the user devices 540a and 540b through the LTE-Uu interface, so as to allow the user devices 540a and 540b to individually provide the resource sensing result for the specific resource pool to the base station.

In response to the grant signal, the user devices 540a and 540b may respectively perform steps S514a and S514b to transmit the resource sensing result for the specific resource pool (e.g., transmitted by a third RRC signal in high layer or a third uplink control signal in physical layer) to the base station 510. Then, the base station 510 may perform step S515 to generate the specific resource sensing result associated with the specific resource pool based on the resource sensing result provided by each of the user devices 540a and 540b, and transmit the specific resource sensing result (e.g., transmitted by a fourth RRC signal in high layer or a fourth downlink control signal in physical layer) to the first user device 530a.

Then, the first user device 530a may perform step S516 to obtain the available resource units in the specific resource pool based on the specific resource sensing result from the base station 510, and perform the sidelink transmission based on the available resource units (step S517).

In an embodiment, the first user device 530a may adopt, for example, a random access on the available resource units to perform the NR sidelink transmission with the user device 530b, but the disclosure is not limited thereto.

It should be understood that although it is not illustrated in FIG. 5B that the first user device 530a may transmit its own resource sensing result for the specific resource pool to the base station 510, in other embodiments, the first user device 530a may also perform operations similar to steps S511a, S512a, S513a and S514a to provide the resource sensing result for the specific resource pool to the base station 510. The disclosure is not limited in this regard.

As can be known from the above, the disclosure may allow the base station 510 operating in LTE (e.g., the eNB) to estimate the specific resource sensing result associated with the specific resource pool more accurately based on the resource sensing result provided by each of the user devices 540a and 540b applying Mode 2 of the 5G vehicle communication system. In this way, the first user device 530a can accordingly obtain the wireless resources and perform the NR sidelink transmission. Therefore, in the early stage of 5G NR deployment process, the disclosure may allow the eNB to assist the NR-V2X user device operating at Mode 2 of the 5G vehicle communication system to obtain available wireless resources, thereby improving resource access efficiency and performance of the NR-V2X user device.

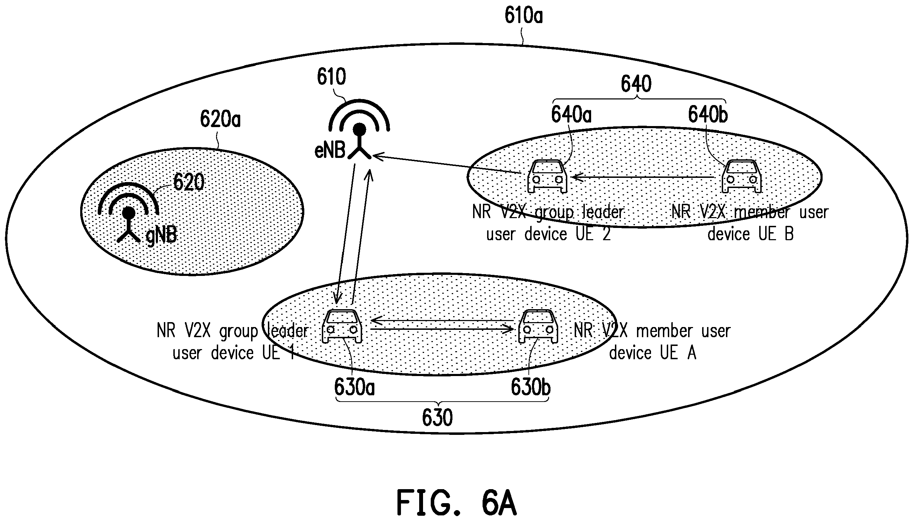

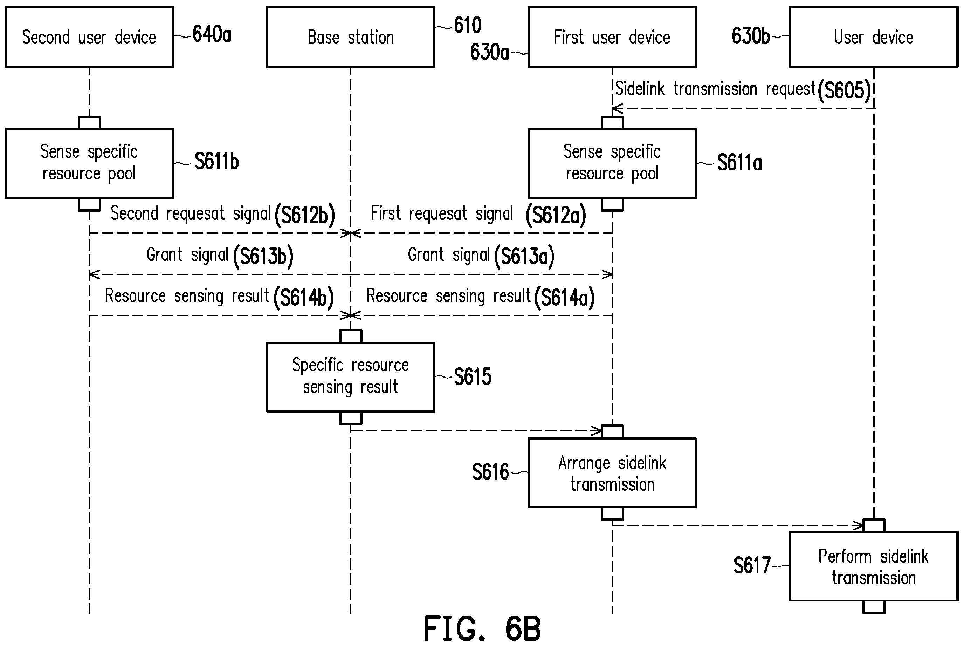

In addition, in the second application scenario of the first embodiment, the user devices under consideration may be divided into one or more specific groups. Each specific group may include a leader user device and one or more member user devices, wherein each member user device may request the leader user device for the wireless resources to be used in the sidelink transmission, and the leader user device may correspondingly request the base station for the wireless resources to be used in the sidelink transmission performed by all the member user devices in the specific group. Relevant details will be described with reference to FIG. 6A and FIG. 6B.

Referring to FIG. 6A, which is a schematic diagram of the second application scenario illustrated according to the first embodiment of the disclosure. In FIG. 6A, a base station 610 is, for example, the eNB corresponding to LTE (i.e., the first communication system) and has a coverage 610a. Further, a base station 620 is, for example, the gNB corresponding to NR (i.e., the second communication system) and has a coverage 620a. Moreover, a plurality of user devices shown by FIG. 6A may be divided into specific groups 630 and 640, wherein the specific group 630 includes a first user device 630a and a user device 630b, and the specific group 640 includes a second user device 640a and a user device 640b.

In the specific group 630, for example, the first user device 630a is the leader user device responsible for communicating with the base station 610, and the user device 630b is the member user device in the specific group 630. Further, in the specific group 640, for example, the second user device 640a is the leader user device responsible for communicating with the base station 610, and the user device 640b is the member user device in the specific group 640. In an embodiment, the first user device 630a and the second user device 640a may be implemented by a road side unit (RSU), but not limited thereto.

In FIG. 6A, it is assumed that the user device 630b requests the first user device 630a for wireless resources to be used in the NR sidelink transmission, but the first user device 630a is located outside the coverage 620a of the base station 620 and unable to obtain available wireless resources assisted and arranged by the base station 620. In other words, the first user device 630a is, for example, the NR-V2X user device operating at Mode 2 of the 5G vehicle communication system. In this case, since the first user device 630a is located within the coverage 610a of the base station 610, the base station 610 may allocate the available resource units that can be used to arrange the NR sidelink transmission for the first user device 630a by executing the method for allocating sidelink resources of FIG. 2.

Referring FIG. 6B, which is a flowchart of the method for allocating sidelink resources illustrated according to FIG. 6A. As shown by FIG. 6B, the user device 630b (i.e., the member user device in the specific group 630) may transmit a sidelink transmission request to the first user device 630a in step S605 to request for the NR sidelink transmission. In this embodiment, the sidelink transmission request transmitted by the user device 630b may include an individual amount of required resources. In other embodiments, if there are other member user devices in the specific group 630, these member user devices may also inform the individual amount of required resources to the first user device 630a through the corresponding sidelink transmission request.

Similarly, in an embodiment, the user device 640b (i.e., the member user device in the specific group 640) may transmit a sidelink transmission request (which includes the individual amount of required resources for the user device 640b) to the second user device 640a to request for the NR sidelink transmission, but not limited thereto.

Then, the first user device 630a and the second user device 640a (i.e., the leader user devices of the specific groups 630 and 640) may respectively perform steps S611a and S611b to sense the reference signal strength or the resource usage status indicator value of each resource unit in the specific resource pool according to the teaching of the foregoing embodiment. In the second application scenario of the first embodiment, the second user device 640a and the user devices 630b and 640b are also the NR-V2X user devices operating at Mode 2 of the 5G vehicle communication system, but not limited thereto.

Then, the first user device 630a and the second user device 640a may respectively perform steps S612a and S612b to respectively transmit a first request signal and a second request signal to the base station 610. In the second application scenario of the first embodiment, the first user device 630a and the second user device 640a may transmit the first and second request signals to the base station 610 through the LTE-Uu interface, but not limited thereto. In an embodiment, the first request signal transmitted by the first user device 630a may also include an amount of required resources for the specific group 630, and the amount of required resources is, for example, a sum of the individual amount of required resources for all the member user devices in the specific group 630, but not limited thereto. In other words, the first user device 630a may inform the amount of required resources for the specific group 630 to the base station 610 through the first request signal, but not limited thereto. Similarly, the second user device 640a may inform the amount of required resources for the specific group 640 to the base station 610 through the second request signal.

After receiving the first and second request signals, the base station 610 may perform step S613a and S613b to correspondingly return the grant signal to the first user device 630a and the second user device 640a, so as to allow the first user device 630a and the second user device 640a to individually provide the resource sensing result for the specific resource pool.

In response to the grant signal, the first user device 630a and the second user device 640a may respectively perform steps S614a and S614b to transmit the resource sensing result for the specific resource pool to the base station 610. Then, the base station 610 may perform step S615 to generate the specific resource sensing result associated with the specific resource pool based on the resource sensing result provided by the first user device 630a and the second user device 640a, and transmit the specific resource sensing result to the first user device 630a.

In an embodiment, the base station 610 may provide all the available resource units in the specific resource pool as the specific resource sensing result to the first user device 630a so that the first user device 630a correspondingly arranges the sidelink transmission based on all the available resource units in the specific resource pool (step S616). For example, the first user device 630a may directly allow the user device 630b to perform the random access on all the available resource units in the specific resource pool, so as to perform the sidelink transmission (step S617).

However, the above approach may accordingly lead to a higher probability of resource selection collision. Specifically, if the base station 610 also provides all the available resource units in the specific resource pool as the specific resource sensing result to the second user device 640a at the same time so that the second user device 640a correspondingly arranges the sidelink transmission based on all the available resource units in the specific resource pool, the specific groups 630 and 640 may encounter collision and/or interference when the member user devices in the specific groups 630 and 640 perform the random access on the available resource units for NR sidelink transmission.

In an embodiment, the base station 610 of the disclosure may perform a first-level collision avoidance mechanism to avoid the above situation. Specifically, the base station 610 of the disclosure may inform the first user device 630a of only a part of the available resource units in the specific resource pool as the specific resource sensing result, and inform the second user device 640a of the other available resource units in the specific resource pool as the specific resource sensing result. In this way, the specific groups 630 and 640 can be allocated with different available resource units, thereby avoiding collision between the specific groups 630 and 640 when the member user devices in the specific groups 630 and 640 perform the random access on the different available resource units for NR sidelink transmission.

In addition, the available resource units allocated to each of the specific groups 630 and 640 may be associated with the respective amount of required resources. For example, the base station 610 may allocate a corresponding number of the available resource units to each of the specific groups 630 and 640 according to the amount of required resources for each of the specific groups 630 and 640. Alternatively, the base station 610 may allocate the available resource units to the specific groups 630 and 640 according to a ratio between the amount of required resources for the specific groups 630 and 640, but not limited thereto.

In addition, although the base station 610 may avoid a resource selection collision between the specific groups 630 and 640 through the first-level collision avoidance mechanism, it may not be possible to avoid a resource selection collision caused by competition of the available resource units between the member user devices in each specific group. Therefore, the disclosure may also propose each leader user device to implement a second-level collision avoidance mechanism to mitigate the resource selection collision in each specific group.

Specifically, it is assumed that a first specific group includes one lead user device and eight member user devices (referred to as UE1 to UE8). If the first specific group intends to use the second-level collision avoidance mechanism, each member user device may have a priority indicator and a time indicator of its own attached in the sidelink transmission request to inform the leader user device when transmitting the sidelink transmission request.

In an embodiment, the priority indicator is, for example, any parameter/attribute representing a transmission priority of the member user device. For illustrative convenience, it is assumed herein that the priority indicator is ProSe Per-Packet Priority (PPPP) defined in the LTE specification, but not limited thereto. In addition, the time indicator of each member user device is, for example, an instant of time at which the respective member user device transmits the sidelink transmission request, but not limited thereto.

In an embodiment, the leader user device may allocate the available resource units to each member user device according to the priority indicator and the time indicator of each member user device, so as to allow the member user device to perform the NR sidelink transmission. For instance, the leader user device may preferentially allocate the available resource units to the member user device with higher priority indicator. When there are more than two member user devices having the same priority indicator, the leader user device may preferentially allocate the available resource units to the member user device with the earlier time indicator, but not limited thereto.

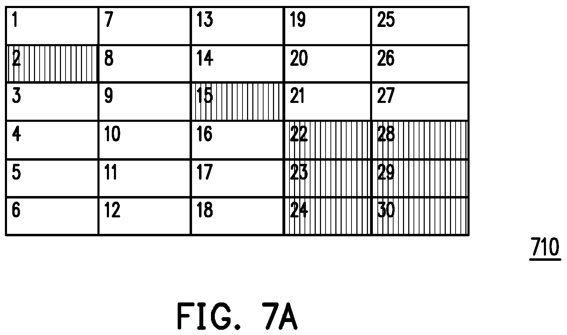

In order to make the above concept easier to understand, an example is further provided as follows. Referring to FIG. 7A, which is a schematic diagram of a specific resource sensing result illustrated according to an embodiment of the disclosure. In FIG. 7A, it is assumed that the leader user device of the first specific group is allocated with a specific resource sensing result 710. As shown by FIG. 7A, the specific resource sensing result 710 includes 30 resource units in total. Among them, 22 resource units are the available resource units (i.e., resource units numbered 1, 3, 4, 5, 6, 7, 8, 9, 10, 11, 12, 13, 14, 16, 17, 18, 19, 20, 21, 25, 26 and 27), and the other 8 resource units are the occupied resource units (i.e., resource units numbered 2, 15, 22, 23, 24, 28, 29 and 30).

In this embodiment, it is assumed that the specific resource sensing result 710 is adapted to a plurality of time periods, and UE1 to UE6 in the first specific group make the respective sidelink transmission requests at different time instants in a first time period P1. The priority indicators and the time indicators of UE1 to UE6 can be exemplified in Table 1 below.

**Table 1**

| Member user device | Priority indicator | Time indicator | Individual amount of required resources (resource unit) |
|---|---|---|---|
| UE1 | PPPP1 | T1 | 2 |
| UE2 | PPPP1 | T2 | 4 |
| UE3 | PPPP2 | T2 | 4 |
| UE4 | PPPP2 | T3 | 4 |
| UE5 | PPPP3 | T3 | 4 |
| UE6 | PPPP3 | T4 | 6 |

In Table 1 above, it is assumed that PPP1 has higher priority than PPP2, and PPP2 has higher priority than PPP3. Further, it is assumed that T1<T2<T3<T4. Therefore, according to the foregoing teaching, it can be known that priority orders of UE1 to UE6 from high to low should be UE1, UE2, UE3, UE4, UE5, and UE6. In addition, it is assumed that UE7 and UE8 also make the respective sidelink transmission requests in a second time period P2 subsequent to the first time period P1, and the priority indicators and the time indicators are exemplified in Table 2 below.

**Table 2**

| Member user device | Priority indicator | Time indicator | Individual amount of required resources (resource unit) |
|---|---|---|---|
| UE7 | PPPP1 | T5 | 4 |
| UE8 | PPPP3 | T5 | 4 |

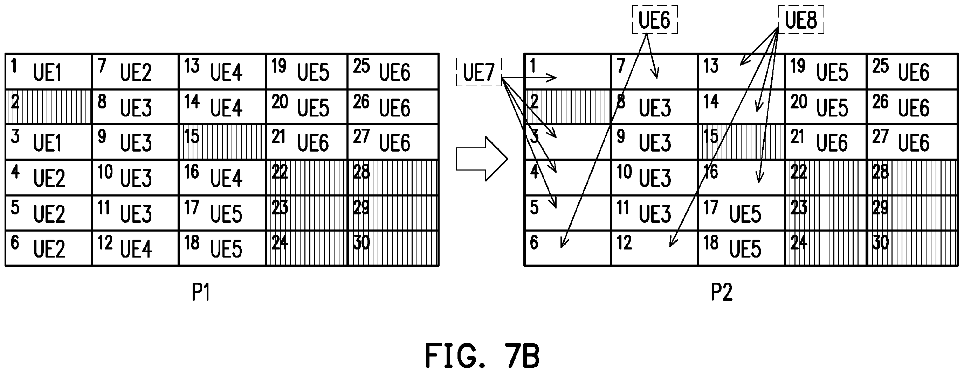

Referring FIG. 7B, which is a schematic diagram of a sidelink resource allocation result illustrated according to an embodiment of the disclosure. As shown by FIG. 7B, in the first time period P1, the leader user device may allocate the available resource units to UE1 to UE6 according to the priority orders of UE1 to UE6, so that UE1 to UE6 may perform the respective NR sidelink transmission. The relevant available resource unit allocating results are shown in the left half of FIG. 7B. However, since UE6 is not allocated with sufficient available resource units in the first time period P1, the leader user device may determine whether there are unallocated available resource units in the next time period to be allocated to UE6.

Specifically, since UE6 has the individual amount of required resources of 6 resource units but is only allocated with 4 available resource units in the first time period P1, the leader user device may, for example, allocate 2 available resource units to UE6 in the second time period P2 so as to satisfy the requirement of UE6.

In FIG. 7B, it is assumed that UE1, UE2 and UE4 have completed the NR sidelink transmission in the first time period P1, and thus the corresponding resource units (i.e., the resource units numbered 1, 3 to 7, 12 to 14 and 16) will be released. Accordingly, the leader user device may allocate the released resource units as the available resource units to be allocated to UE6, UE7 and UE8. In the second time period P2, the priority orders of UE6 to UE8 from high to low are UE7, UE6 and UE8. Therefore, the leader user device may allocate the available resource units to UE6 to UE8 according to the priority orders so that UE6 to UE8 may perform the respective NR sidelink transmission. The relevant resource unit allocating results are shown in the right half of FIG. 7B.

As can be known from the above that, through the first-level collision avoidance mechanism performed by the base station, it is possible to avoid the resource selection collision between different specific groups due to competition for the same available resource units. Further, through the second-level collision avoidance mechanism performed by the leader user device, it is possible to avoid the resource selection collision between the member user devices due to competition for the same available resource units.

It can be known from the above description that in the first embodiment, it is assumed that the first communication system is LTE (which can be considered as the 4G vehicle communication system), and the second communication system is NR (which can be considered as the 5G vehicle communication system). In contrast, in the second embodiment, it is assumed that the first communication system and the second communication system are NR and LTE, respectively. Generally speaking, the operations performed by the eNB in the first embodiment are performed by the gNB in the second embodiment instead. That is, in the second embodiment, the gNB assists the LTE-V2X user device for resource assistance or arrangement, and details are provided as follows.

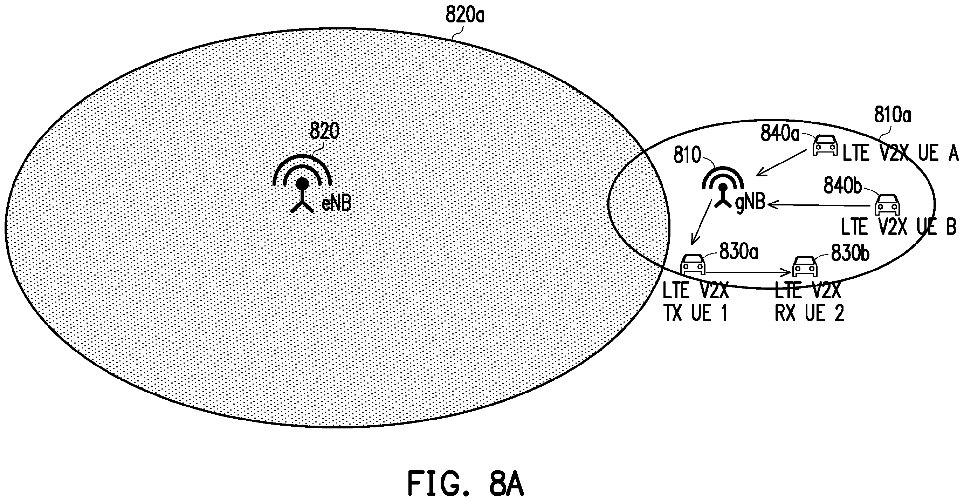

Referring to FIG. 8A, which is a schematic diagram of the third application scenario illustrated according to the second embodiment of the disclosure. In the third application scenario of the second embodiment, a base station 810 is, for example, the gNB corresponding to NR (i.e., the first communication system) and has a coverage 810a. Further, a base station 820 is, for example, the eNB corresponding to LTE (i.e., the second communication system) and has a coverage 820a.

In FIG. 8A, it is assumed that a first user device 830a intends to perform a sidelink transmission corresponding to LTE (hereinafter referred to as the LTE sidelink transmission), but the first user device 830a is located outside the coverage 820a of the base station 820 and unable to obtain available wireless resources through assistance of the base station 820. In other words, the first user device 830a is, for example, the LTE-V2X user device operating at Mode 4 of the 4G vehicle communication system. In this case, since the first user device 830a is located within the coverage 810a of the base station 810, the base station 810 may assist the first user device 830a to select the available resource units that can be used to perform the LTE sidelink transmission by executing the method for allocating sidelink resources of FIG. 2.

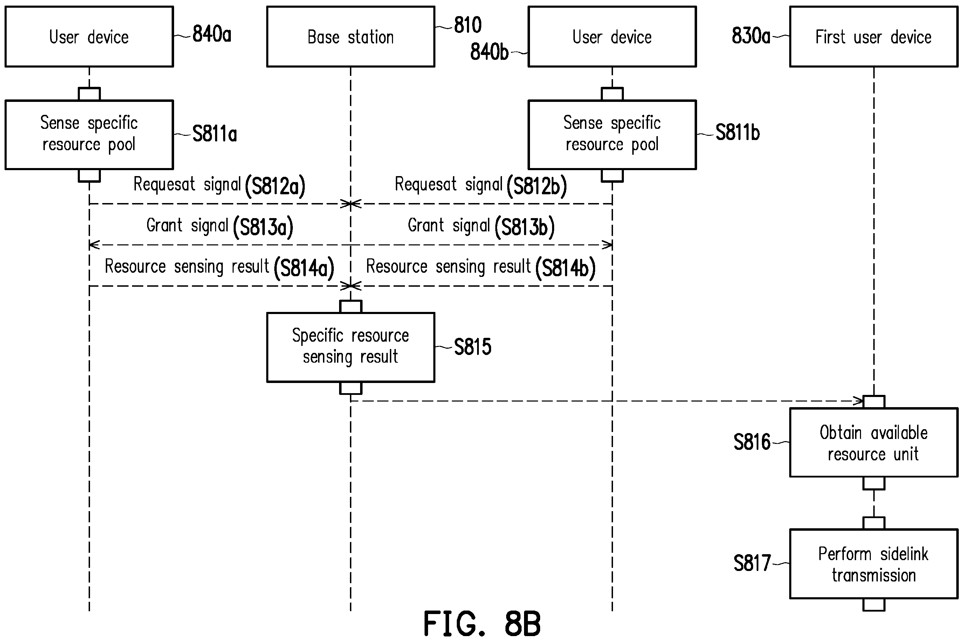

Referring FIG. 8B, which is a flowchart of the method for allocating sidelink resources illustrated according to FIG. 8A. As shown by FIG. 8B, user devices 840a and 840b may respectively perform steps S811a and S811b to sense the reference signal strength or the resource usage status indicator value of each resource unit in the specific resource pool according to the teaching of the foregoing embodiment. In the third application scenario of the second embodiment, the user devices 830b, 840a and 840b are also the LTE-V2X user devices operating at Mode 4 of the 4G vehicle communication system, but not limited thereto.

Then, the user devices 840a and 840b may respectively perform steps S812a and S812b to transmit the request signal (e.g., transmitted by the first RRC signal in high layer or the first uplink control signal in physical layer) to the base station 810. In the third application scenario of the second embodiment, the user devices 840a and 840b may, for example, transmit the request signal to the base station 810 through the NR-Uu interface, but not limited thereto.

After receiving the request signal, the base station 810 may perform steps S813a and S813b to correspondingly return the grant signal (e.g., returned by the second RRC signal in high layer or the second downlink control signal in physical layer) to the user devices 840a and 840b, so as to allow the user devices 840a and 840b to individually provide the resource sensing result for the specific resource pool to the base station.

In response to the grant signal, the user devices 840a and 840b may respectively perform steps S814a and S814b to transmit the resource sensing result for the specific resource pool (e.g., transmitted by the third RRC signal in high layer or the third uplink control signal in physical layer) to the base station 810. Then, the base station 810 may perform step S815 to generate the specific resource sensing result associated with the specific resource pool based on the resource sensing result provided by the user devices 840a and 840b, and transmit the specific resource sensing result (e.g., transmitted by the fourth RRC signal in high layer or the fourth downlink control signal in physical layer) to the first user device 830a.

Then, the first user device 830a may perform step S816 to obtain the available resource units in the specific resource pool based on the specific resource sensing result from the base station 810, and perform the sidelink transmission based on the available resource units (step S817).

In an embodiment, the first user device 830a may adopt, for example, the random access on the available resource units to realize the LTE sidelink transmission with the user device 830b, but the disclosure is not limited thereto.

It should be understood that although it is not illustrated in FIG. 8B that the first user device 830a may transmit its own resource sensing result for the specific resource pool to the base station 810, in other embodiments, the first user device 830a may also perform operations similar to steps S811a, S812a, S813a and S814a to provide the resource sensing result for the specific resource pool to the base station 810. The disclosure is not limited in this regard.

As can be known from the above, the disclosure may allow the base station 810 operating in NR (e.g., the gNB) to estimate the specific resource sensing result associated with the specific resource pool more accurately based on the resource sensing result provided by the user devices 840a and 840b applying Mode 4 of the 4G vehicle communication system. In this way, the first user device 830a can accordingly obtain the wireless resources and perform the LTE sidelink transmission. Therefore, in the later stage of 5G NR deployment process, the disclosure may allow the gNB to assist the LTE-V2X user device operating at Mode 4 of the 4G vehicle communication system to obtain available wireless resources, thereby improving resource access efficiency and performance of the LTE-V2X user device.

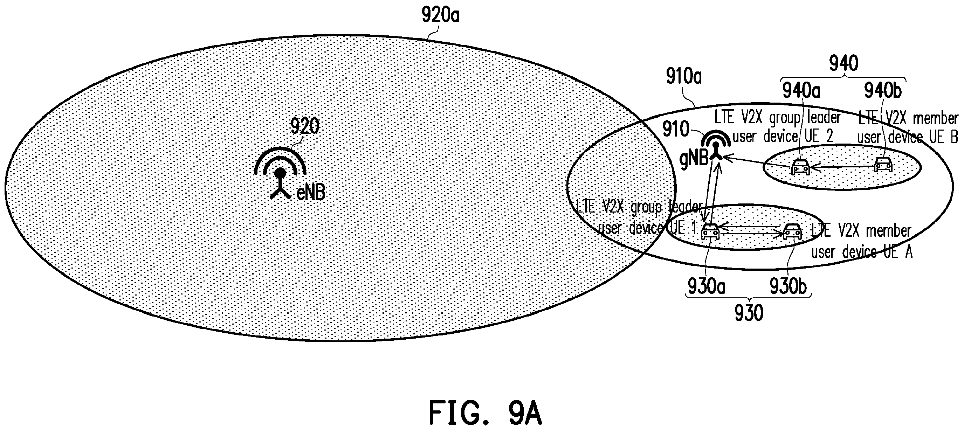

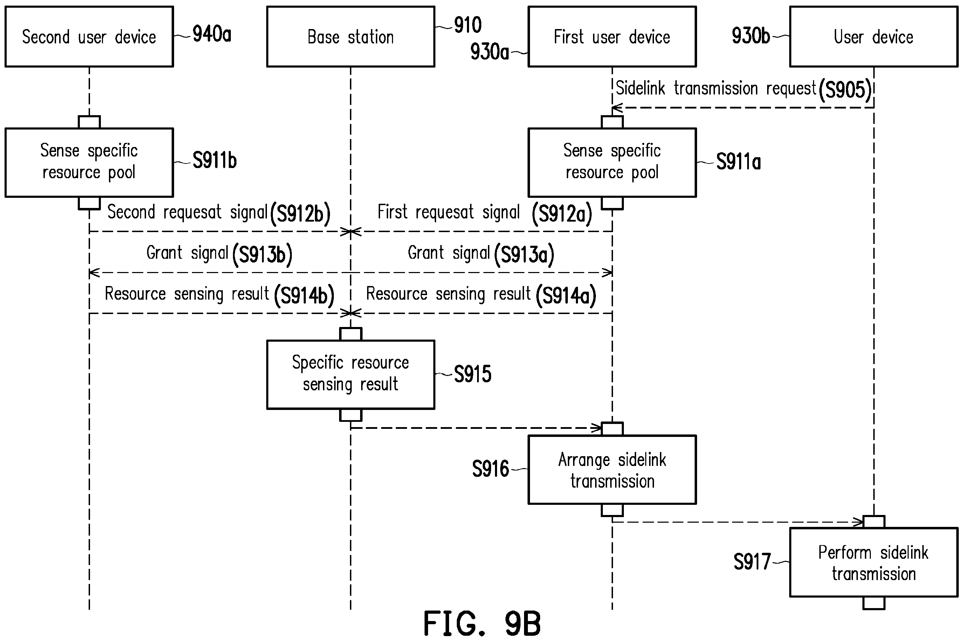

In addition, in the fourth application scenario of the second embodiment, the user devices under consideration may be divided into one or more specific groups. Each specific group may include a leader user device and one or more member user devices, wherein each member user device may request the leader user device for the wireless resources to be used in the sidelink transmission, and the leader user device may correspondingly request the base station for the wireless resources to be used in the sidelink transmission performed by all the member user devices in the specific group. Relevant details will be described with reference to FIG. 9A and FIG. 9B.

Referring to FIG. 9A, which is a schematic diagram of the fourth application scenario illustrated according to the second embodiment of the disclosure. In FIG. 9A, a base station 910 is, for example, the gNB corresponding to NR (i.e., the first communication system) and has a coverage 910a. Further, a base station 920 is, for example, the eNB corresponding to LTE (i.e., the second communication system) and has a coverage 920a. Moreover, a plurality of user devices shown by FIG. 9A may be divided into specific groups 930 and 940, wherein the specific group 930 includes a first user device 930a and a user device 930b, and the specific group 940 includes a second user device 940a and a user device 940b.

In the specific group 930, for example, the first user device 930a is the leader user device responsible for communicating with the base station 910, and the user device 930b is the member user device in the specific group 930. Further, in the specific group 940, for example, the second user device 940a is the leader user device responsible for communicating with the base station 910, and the user device 940b is the member user device in the specific group 940.

In FIG. 9A, it is assumed that the user device 930b requests the first user device 930a for wireless resources to be used in the LTE sidelink transmission, but the first user device 930a is located outside the coverage 920a of the base station 920 and unable to obtain available wireless resources assisted and arranged by the base station 920. In other words, the first user device 930a is, for example, the LTE-V2X user device operating at Mode 4 of the 4G vehicle communication system. In this case, since the first user device 930a is located within the coverage 910a of the base station 910, the base station 910 may allocate the available resource units that can be used to arrange the LTE sidelink transmission for the first user device 930a by executing the method for allocating sidelink resources of FIG. 2.

Referring FIG. 9B, which is a flowchart of the method for allocating sidelink resources illustrated according to FIG. 9A. As shown by FIG. 9B, the user device 930b (i.e., the member user device in the specific group 930) may transmit a sidelink transmission request to the first user device 930a in step S905 to request for the LTE sidelink transmission. In this embodiment, the sidelink transmission request transmitted by the user device 930b may include an individual amount of required resources. In other embodiments, if there are other member user devices in the specific group 930, these member user devices may also inform the individual amount of required resources to the first user device 930a through the corresponding sidelink transmission request.

Similarly, in an embodiment, the user device 940b (i.e., the member user device in the specific group 940) may transmit a sidelink transmission request (which includes the individual amount of required resources for the user device 940b) to the second user device 940a to request for the LTE sidelink transmission, but not limited thereto.

Then, the first user device 930a and the second user device 940a (i.e., the leader user devices of the specific groups 930 and 940) may respectively perform steps S911a and S911b to sense the reference signal strength or the resource usage status indicator value of each resource unit in the specific resource pool according to the teaching of the foregoing embodiment. In the fourth application scenario of the second embodiment, the second user device 940a and the user devices 930b and 940b are also the LTE-V2X user devices operating at Mode 4 of the 4G vehicle communication system, but not limited thereto.

Then, the first user device 930a and the second user device 940a may respectively perform steps S912a and S912b to respectively transmit a first request signal and a second request signal to the base station 910. In the fourth application scenario of the second embodiment, the first user device 930a and the second user device 940a may transmit the first and second request signals to the base station 910 through the NR-Uu interface, but not limited thereto. In an embodiment, the first request signal transmitted by the first user device 930a may also include an amount of required resources for the specific group 930, and the amount of required resources is, for example, a sum of the individual amount of required resources for all the member user devices in the specific group 930, but not limited thereto. In other words, the first user device 930a may inform the amount of required resources for the specific group 930 to the base station 910a through the first request signal, but not limited thereto. Similarly, the second user device 940a may inform the amount of required resources for the specific group 940 to the base station 910a through the second request signal.

After receiving the first and second request signals, the base station 910 may perform step S913a and S913b to correspondingly return the grant signal to the first user device 930a and the second user device 940a, so as to allow the first user device 930a and the second user device 940a to individually provide the resource sensing result for the specific resource pool.

In response to the grant signal, the first user device 930a and the second user device 940a may respectively perform steps S914a and S914b to transmit the resource sensing result for the specific resource pool to the base station 910. Then, the base station 910 may perform step S915 to generate the specific resource sensing result associated with the specific resource pool based on the resource sensing result provided by the first user device 930a and the second user device 940a, and transmit the specific resource sensing result to the first user device 930a.

In an embodiment, the base station 910 may provide all the available resource units in the specific resource pool as the specific resource sensing result to the first user device 930a so that the first user device 930a correspondingly arranges the sidelink transmission based on all the available resource units in the specific resource pool (step S916). For example, the first user device 930a may directly allow the user device 930b to perform the random access on all the available resource units in the specific resource pool, so as to perform the sidelink transmission (step S917).

In another embodiment, the base station 910 may also allocate resources to the specific groups according to the first-level collision avoidance mechanism previously taught, so as to avoid the resource selection collision between different specific groups 930 and 940 due to competition for the same available resource units. In addition, the first user device 930a and/or the second user device 940a may also allocate resources based on the second-level collision avoidance mechanism previously taught, so as to avoid the resource selection collision between the member user devices due to competition for the same available resource units. The disclosure is not limited in this regard.

It should be understood that although the 4G and 5G vehicle communication systems are taken herein as examples, the method of this disclosure may also be popularized in general 4G and 5G cellular communication systems and are not limited only to the vehicle communication systems.

In addition, although it is described as an example in the foregoing embodiments that the request signal, the grant signal and specific resource sensing result belong to different RRC signals in high layer or the uplink/downlink control signals in physical layer, the disclosure is not limited thereto.

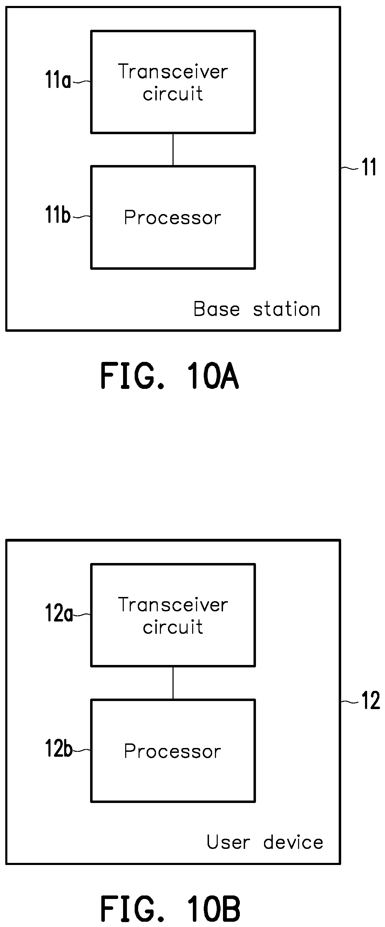

Referring to FIG. 10A, which is a functional block diagram of a base station illustrated according to an embodiment of the disclosure. As shown by FIG. 10A, the base station 11 may include a transceiver circuit 11a and a processor 11b.

In different embodiments, the transceiver circuit 11a may provide a wireless access for the base station 11 of FIG. 10A by at least including (but not limited to) a transmitter circuit, a receiver circuit, an analog-to-digital (A/D) converter, a digital-to-analog (D/A) converter, a low noise amplifier (LNA), a mixer, a filter, a matching circuit, a transmission line, a power amplifier (PA), one or more antenna units and a local storage media component.

The receiver circuit may include functional units for performing operations like low noise amplifying, impedance matching, frequency mixing, frequency down conversion, filtering, power amplification and so on. The transmitter circuit may include functional units for performing operations like low noise amplifying, impedance matching, frequency mixing, frequency up conversion, filtering, power amplification and so on. The A/D converter is configured to convert an analog signal format into a digital signal format during downlink signal processing, and the D/A converter is configured to convert the digital signal format into the analog signal format during uplink signal processing.

The processor 11b is coupled to the transceiver circuit 11a, and may be a processor for general purposes, a processor for special purposes, a conventional processor, a digital signal processor, a plurality of microprocessors, one or more microprocessors which are combined with a core of the digital signal processor, controllers and microcontrollers, an application specific integrated circuit (ASIC), a field programmable gate array (FPGA), any other integrated circuits, a state machine, a processor based on advanced RISC machine (ARM) and the like.

In the embodiments of the disclosure, the processor 11b may access specific modules or program codes to realize the method for allocating sidelink resources proposed by the disclosure in cooperation with the transceiver circuit 11a. For details regarding the same, reference may be made to the description in the foregoing embodiment, which is not repeated hereinafter.

Referring to FIG. 10B, which is a functional block diagram of a user device illustrated according to an embodiment of the disclosure. As shown by FIG. 10B, a user device 12 may include a transceiver circuit 12a and a processor 12b. For their possible implementations, reference may be made to the relevant description of the transceiver circuit 11a and the processor 11b, which is not repeated hereinafter.

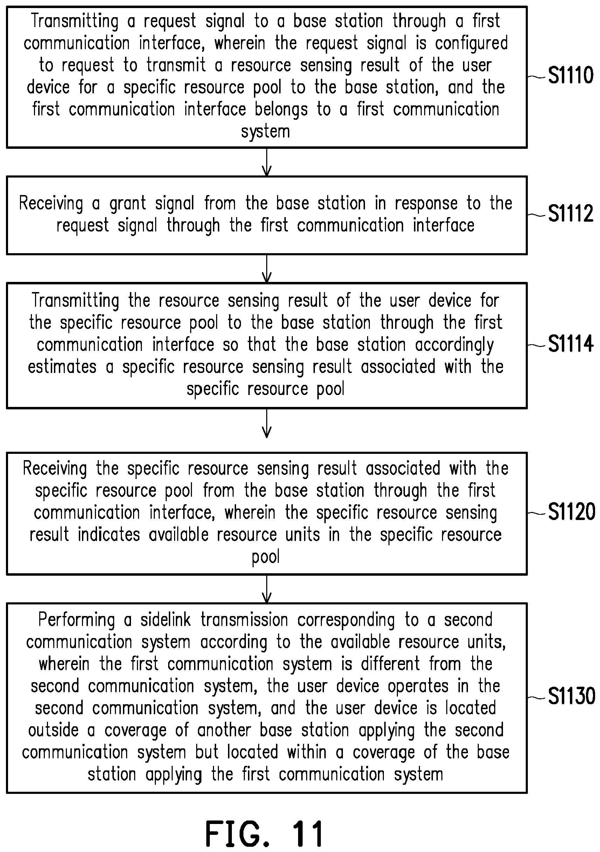

Referring to FIG. 11, which is a flowchart of a method for requesting sidelink resources illustrated according to an embodiment of the disclosure. The method of this embodiment may be performed by the user device 12 of FIG. 10B, and each step of FIG. 11 is described below with reference to the content of FIG. 10B.

First, in step S1110, the processor 12b may control the transceiver circuit 12a to transmit a request signal to a base station though a first communication interface, wherein the request signal is configured to request to transmit a resource sensing result of the user device for a specific resource pool to the base station, and the first communication interface belongs to a first communication system. In step S1112, the processor 12b may control the transceiver circuit 12a to receive a grant signal from the base station in response to the request signal through the first communication interface. In step S1114, the processor 12b may control the transceiver circuit 12a to transmit the resource sensing result of the user device for the specific resource pool to the base station through the first communication interface so that the base station accordingly estimates a specific resource sensing result associated with the specific resource pool. In step S1120, the processor 12b may control the transceiver circuit 12a to receive the specific resource sensing result associated with the specific resource pool from the base station through the first communication interface, wherein the specific resource sensing result indicates available resource units in the specific resource pool. In step S1130, the processor 12b may perform a sidelink transmission corresponding to a second communication system according to the available resource units, wherein the first communication system is different from the second communication system, the user device operates in the second communication system, and the user device is located outside a coverage of another base station applying the second communication system but located within a coverage of the base station applying the first communication system. Details regarding each step of FIG. 11 may refer to the description in the foregoing embodiment, which is not repeated hereinafter.

In summary, as can be known from the above, the disclosure may allow the base station operating in the first communication system to estimate the specific resource sensing result associated with the specific resource pool more accurately based on the resource sensing result provided by each user device operating in the second communication system. Accordingly, the first user device operating in the second communication system may accordingly perform the required sidelink transmission in the second communication system. Therefore, in the different stages of 5G NR deployment process, the disclosure may allow the eNB to assist the NR-V2X user device operating at Mode 2 of the 5G vehicle communication system to obtain available resources or allocate resources, or allow the gNB to assist the LTE-V2X user device operating at Mode 4 of the 4G vehicle communication system to obtain available resources or allocate resources. Accordingly, resource access efficiency and performance of NR-V2X user device and the LTE-V2X user device may be improved.

Further, through the first-level collision avoidance mechanism performed by the base station in the disclosure, it is possible to avoid the resource selection collision and/or interference between different specific groups due to competition for the same available resource units. Furthermore, through the second-level collision avoidance mechanism performed by the leader user device in the disclosure, it is possible to avoid the resource selection collision and/or interference between the member user devices due to competition for the same available resource units.

## Claims

1. A method for allocating sidelink resources, adapted to a base station (11, 510, 520, 610, 620, 810, 820, 910, 920), and comprising:
receiving a request signal individually from at least one user device (12, 530b, 540a, 540b, 630b, 640b, 830b, 840a, 840b, 930b, 940b, UE1∼UE8) through a first communication interface, wherein each of the at least one user device (12, 530b, 540a, 540b, 630b, 640b, 830b, 840a, 840b, 930b, 940b, UE1-UE8) requests to transmit a resource sensing result (300a, 401∼40N) of each of the at least one user device (12, 530b, 540a, 540b, 630b, 640b, 830b, 840a, 840b, 930b, 940b, UE1∼UE8) for a specific resource pool (300) to the base station (11, 510, 520, 610, 620, 810, 820, 910, 920) through the request signal, and the first communication interface belongs to a first communication system;
transmitting a grant signal to each of the at least one user device (12, 530b, 540a, 540b, 630b, 640b, 830b, 840a, 840b, 930b, 940b, UE1∼UE8) in response to the request signal of each of the at least one user device (12, 530b, 540a, 540b, 630b, 640b, 830b, 840a, 840b, 930b, 940b, UE1∼UE8);
receiving the resource sensing result (300a, 401∼40N) of each of the at least one user device (12, 530b, 540a, 540b, 630b, 640b, 830b, 840a, 840b, 930b, 940b, UE1∼UE8), and accordingly estimating a specific resource sensing result (499, 710) associated with the specific resource pool (300), wherein the specific resource sensing result (499, 710) indicates at least one available resource unit (499a) in the specific resource pool (300); and
transmitting the specific resource sensing result (499, 710) to a first user device (530a, 630a, 830a, 930a) through the first communication interface to allow the first user device (530a, 630a, 830a, 930a) to perform a sidelink transmission corresponding to a second communication system, wherein the first communication system is different from the second communication system, each of the at least one user device (12, 530b, 540a, 540b, 630b, 640b, 830b, 840a, 840b, 930b, 940b, UE1∼UE8) operates in the second communication system, and each of the at least one user device (12, 530b, 540a, 540b, 630b, 640b, 830b, 840a, 840b, 930b, 940b, UE1∼UE8) is located outside a coverage (510a, 520a, 610a, 620a, 810a, 820a, 910a, 920a) of another base station (11, 510, 520, 610, 620, 810, 820, 910, 920) applying the second communication system but located within a coverage (510a, 520a, 610a, 620a, 810a, 820a, 910a, 920a) of the base station (11, 510, 520, 610, 620, 810, 820, 910, 920) applying the first communication system.

2. The method according to claim 1, wherein the specific resource pool (300) comprises at least one resource unit (301), and the resource sensing result (300a, 401∼40N) of each of the at least one user device (12, 530b, 540a, 540b, 630b, 640b, 830b, 840a, 840b, 930b, 940b, UE1∼UE8) comprises a reference signal strength corresponding to each of the at least one resource unit (301) or a resource usage status indicator value corresponding to each of the at least one resource unit (301), wherein the resource usage status indicator value is 0 or 1 to indicate that the resource unit (301) is an idle resource unit or an occupied resource unit, and the step of receiving the resource sensing result (300a, 401∼40N) of each of the at least one user device (12, 530b, 540a, 540b, 630b, 640b, 830b, 840a, 840b, 930b, 940b, UE1∼UE8), and accordingly estimating the specific resource sensing result (499, 710) associated with the specific resource pool (300) comprises:
estimating a statistical reference signal strength (420) or a resource usage status indicator statistical value of each of the at least one resource unit (301) based on the reference signal strength or the resource usage status indicator value sensed by each of the at least one user device (12, 530b, 540a, 540b, 630b, 640b, 830b, 840a, 840b, 930b, 940b, UE1∼UE8) for each of the at least one resource unit (301); and
determining the at least one available resource unit (499a) from the at least one resource unit (301) based on the statistical reference signal strength (420) and the resource usage status indicator statistical value of each of the at least one resource unit (301), and accordingly generating the specific resource sensing result (499, 710).

3. The method according to claim 2, wherein the at least one resource unit (301) comprises a first resource unit, and the step of estimating the statistical reference signal strength (420) or the resource usage status indicator statistical value of each of the at least one resource unit (301) based on the reference signal strength or the resource usage status indicator value sensed by each of the at least one user device (12, 530b, 540a, 540b, 630b, 640b, 830b, 840a, 840b, 930b, 940b, UE1∼UE8) for each of the at least one resource unit (301) comprises:
obtaining the reference signal strength or the resource usage status indicator value sensed by each of the at least one user device (12, 530b, 540a, 540b, 630b, 640b, 830b, 840a, 840b, 930b, 940b, UE1∼UE8) for the first resource unit; and
taking a statistical value of the reference signal strength or the resource usage status indicator value sensed by each of the at least one user device (12, 530b, 540a, 540b, 630b, 640b, 830b, 840a, 840b, 930b, 940b, UE1∼UE8) for the first resource unit, and using the statistical value as the statistical reference signal strength (420) or the resource usage status indicator statistical value of the first resource unit, wherein the statistical value is an average value or a weighted sum.

4. The method according to claim 2, wherein the statistical reference signal strength (420) or the resource usage status indicator statistical value of each of the at least one available resource unit (499a) is lower than a preconfigured reference signal strength threshold or a preconfigured resource usage status indicator threshold.

5. The method according to claim 1, wherein the specific resource sensing result (499, 710) comprises at least one location information, and the at least one location information indicates at least one location of the at least one available resource unit (499a) in the specific resource pool (300).

6. The method according to claim 1, wherein the at least one available resource unit (499a) is configured to allow the first user device (530a, 630a, 830a, 930a) to perform the sidelink transmission through a sidelink transmission interface, wherein the sidelink transmission interface belongs to the second communication system.

7. The method according to claim 1, wherein the first user device (530a, 630a, 830a, 930a) belongs to the at least one user device (12, 530b, 540a, 540b, 630b, 640b, 830b, 840a, 840b, 930b, 940b, UE1∼UE8) and is a first leader user device of a first specific group, the first specific group further comprises a first member user device, and the step of receiving the request signal individually from the at least one user device (12, 530b, 540a, 540b, 630b, 640b, 830b, 840a, 840b, 930b, 940b, UE1∼UE8) through the first communication interface comprises:
receiving a first request signal from the first user device (530a, 630a, 830a, 930a) through the first communication interface, wherein the first request signal is transmitted by the first user device (530a, 630a, 830a, 930a) in response to a first sidelink transmission requested by the first member user device, and the first request signal comprises a first amount of required resources of the first specific group.

8. The method according to claim 7, wherein the at least one available resource unit (499a) of the specific resource sensing result (499, 710) is associated with the first amount of required resources of the first specific group.

9. The method according to claim 7, wherein the at least one available resource unit (499a) is configured to allow the first member user device to perform the first sidelink transmission through a sidelink transmission interface, wherein the sidelink transmission interface belongs to a second communication system.

10. The method according to claim 7, wherein the step of receiving the request signal individually from the at least one user device (12, 530b, 540a, 540b, 630b, 640b, 830b, 840a, 840b, 930b, 940b, UE1∼UE8) through the first communication interface further comprises:
receiving a second request signal from a second user device (640a, 940a) through the first communication interface, wherein the second user device (640a, 940a) belongs to the at least one user device (12, 530b, 540a, 540b, 630b, 640b, 830b, 840a, 840b, 930b, 940b, UE1∼UE8) and is a second leader user device of a second specific group, and the method further comprises:
estimating another specific resource sensing result associated with the specific resource pool (300) according to the resource sensing result (300a, 401∼40N)of each of the at least one user device (12, 530b, 540a, 540b, 630b, 640b, 830b, 840a, 840b, 930b, 940b, UE1∼UE8), wherein the another specific resource sensing result indicates other available resource units (499a) in the specific resource pool (300);
transmitting the another specific resource sensing result to the second user device (640a, 940a) through the first communication interface to allow the second user device (640a, 940a) to arrange another sidelink transmission.

11. The method according to claim 1, wherein the first communication system is a first vehicle communication system, the second communication system is a second vehicle communication system, and the first vehicle communication system and the second vehicle communication system belong to different communication systems.

12. The method according to claim 11, wherein the first vehicle communication system is one of a 4G vehicle communication system and a 5G vehicle communication system, and the second vehicle communication system is another one of the 4G vehicle communication system and the 5G vehicle communication system.

13. The method according to claim 12, wherein in response to the first vehicle communication system being the 4G vehicle communication system, each of the at least one user device (12, 530b, 540a, 540b, 630b, 640b, 830b, 840a, 840b, 930b, 940b, UE1∼UE8) operates at Mode 2 of the 5G vehicle communication system; and
in response to the first vehicle communication system being the 5G vehicle communication system, each of the at least one user device (12, 530b, 540a, 540b, 630b, 640b, 830b, 840a, 840b, 930b, 940b, UE1∼UE8) operates at Mode 4 of the 4G vehicle communication system.

14. The method according to claim 1, wherein the request signal, the grant signal and the specific resource sensing result (499, 710) belong to different radio resource control (RRC) signals or uplink/downlink control signals in physical layer.

15. A base station (11, 510, 520, 610, 620, 810, 820, 910, 920), comprising:
a transceiver circuit (11a, 12a); and
a processor (11b, 12b), coupled to the transceiver circuit (11a, 12a), and configured to:
control the transceiver circuit (11a, 12a) to receive a request signal individually from at least one user device (12, 530b, 540a, 540b, 630b, 640b, 830b, 840a, 840b, 930b, 940b, UE1∼UE8) through a first communication interface, wherein each of the at least one user device (12, 530b, 540a, 540b, 630b, 640b, 830b, 840a, 840b, 930b, 940b, UE1∼UE8) requests to transmit a resource sensing result (300a, 401∼40N) of each of the at least one user device (12, 530b, 540a, 540b, 630b, 640b, 830b, 840a, 840b, 930b, 940b, UE1∼UE8) for a specific resource pool (300) to the base station (11, 510, 520, 610, 620, 810, 820, 910, 920) through the request signal, and the first communication interface belongs to a first communication system;
control the transceiver circuit (11a, 12a) to transmit a grant signal to each of the at least one user device (12, 530b, 540a, 540b, 630b, 640b, 830b, 840a, 840b, 930b, 940b, UE1∼UE8) in response to the request signal of each of the at least one user device (12, 530b, 540a, 540b, 630b, 640b, 830b, 840a, 840b, 930b, 940b, UE1∼UE8);
control the transceiver circuit (11a, 12a) to receive the resource sensing result (300a, 401∼40N) of each of the at least one user device (12, 530b, 540a, 540b, 630b, 640b, 830b, 840a, 840b, 930b, 940b, UE1∼UE8), and accordingly estimate a specific resource sensing result (499, 710) associated with the specific resource pool (300), wherein the specific resource sensing result (499, 710) indicates at least one available resource unit (499a) in the specific resource pool (300); and
control the transceiver circuit (11a, 12a) to transmit the specific resource sensing result (499, 710) to a first user device (530a, 630a, 830a, 930a) through the first communication interface to allow the first user device (530a, 630a, 830a, 930a) to perform a sidelink transmission corresponding to a second communication system, wherein the first communication system is different from the second communication system, each of the at least one user device (12, 530b, 540a, 540b, 630b, 640b, 830b, 840a, 840b, 930b, 940b, UE1∼UE8) operates in the second communication system, and each of the at least one user device (12, 530b, 540a, 540b, 630b, 640b, 830b, 840a, 840b, 930b, 940b, UE1∼UE8) is located outside a coverage (510a, 520a, 610a, 620a, 810a, 820a, 910a, 920a) of another base station (11, 510, 520, 610, 620, 810, 820, 910, 920) applying the second communication system but located within a coverage (510a, 520a, 610a, 620a, 810a, 820a, 910a, 920a) of the base station (11, 510, 520, 610, 620, 810, 820, 910, 920) applying the first communication system.

16. A method for requesting sidelink resources, adapted to a user device (12, 530b, 540a, 540b, 630b, 640b, 830b, 840a, 840b, 930b, 940b, UE1∼UE8), and comprising:
transmitting a request signal to a base station (11, 510, 520, 610, 620, 810, 820, 910, 920) through a first communication interface, wherein the request signal is configured to request to transmit a resource sensing result (300a, 401∼40N) of the user device (12, 530b, 540a, 540b, 630b, 640b, 830b, 840a, 840b, 930b, 940b, UE1∼UE8) for a specific resource pool (300) to the base station (11, 510, 520, 610, 620, 810, 820, 910, 920), and the first communication interface belongs to a first communication system;
receiving a grant signal from the base station (11, 510, 520, 610, 620, 810, 820, 910, 920) in response to the request signal through the first communication interface;
transmitting the resource sensing result (300a, 401∼40N) of the user device (12, 530b, 540a, 540b, 630b, 640b, 830b, 840a, 840b, 930b, 940b, UE1∼UE8) to the base station (11, 510, 520, 610, 620, 810, 820, 910, 920) for the specific resource pool (300) through the first communication interface so that the base station (11, 510, 520, 610, 620, 810, 820, 910, 920) accordingly estimates a specific resource sensing result (499, 710) associated with the specific resource pool (300);
receiving the specific resource sensing result (499, 710) associated with the specific resource pool (300) from the base station (11, 510, 520, 610, 620, 810, 820, 910, 920) through the first communication interface, wherein the specific resource sensing result (499, 710) indicates at least one available resource unit (499a) in the specific resource pool (300); and
performing a sidelink transmission corresponding to a second communication system according to the at least one available resource unit (499a), wherein the first communication system is different from the second communication system, the user device (12, 530b, 540a, 540b, 630b, 640b, 830b, 840a, 840b, 930b, 940b, UE1∼UE8) operates in the second communication system, and the user device (12, 530b, 540a, 540b, 630b, 640b, 830b, 840a, 840b, 930b, 940b, UE1∼UE8) is located outside a coverage (510a, 520a, 610a, 620a, 810a, 820a, 910a, 920a) of another base station (11, 510, 520, 610, 620, 810, 820, 910, 920) applying the second communication system but located within a coverage (510a, 520a, 610a, 620a, 810a, 820a, 910a, 920a) of the base station (11, 510, 520, 610, 620, 810, 820, 910, 920) applying the first communication system.

17. The method according to claim 16, wherein the step of performing the sidelink transmission corresponding to the second communication system according to the at least one available resource unit (499a) comprises:
performing the sidelink transmission by using the at least one available resource unit (499a) through a sidelink transmission interface, wherein the sidelink transmission interface belongs to the second communication system.

18. The method according to claim 16, wherein the user device (12, 530b, 540a, 540b, 630b, 640b, 830b, 840a, 840b, 930b, 940b, UE1∼UE8) is a leader user device of a specific group (630, 640, 930, 940), the specific group (630, 640, 930, 940) further comprises at least one member user device, and the method further comprises:
receiving a sidelink transmission request from each of the at least one member user device, and accordingly estimating an amount of required resources of the specific group (630, 640, 930, 940), wherein the sidelink transmission request of each of the at least one member user device comprises an individual amount of required resources of each of the at least one member user device; and
informing the amount of required resources of the specific group (630, 640, 930, 940) to the base station (11, 510, 520, 610, 620, 810, 820, 910, 920) through the request signal.

19. The method according to claim 16, wherein the sidelink transmission request of each of the at least one member user device further comprises a priority indicator and a time indicator, and the step of performing the sidelink transmission corresponding to the second communication system according to the at least one available resource unit (499a) comprises:
allocating the at least one available resource unit (499a) to the at least one member user device according to the priority indicator and the time indicator of each of the at least one member user device, so as to allow the at least one member user device to perform the sidelink transmission.

20. The method according to claim 19, wherein the step of allocating the at least one available resource unit (499a) to the at least one member user device according to the priority indicator and the time indicator of each of the at least one member user device comprises:
determining a priority order of each of the at least one member user device according to the priority indicator and the time indicator of each of the at least one member user device; and
allocating the at least one available resource unit (499a) according to the priority order and the individual amount of required resources of each of the at least one member user device.

21. The method according to claim 20, wherein the specific resource sensing result (499, 710) is adapted to a plurality of time periods, and the method further comprises:
in response to a first member user device not being allocated with sufficient resource units in a first time period (PI), determining whether the at least one available resource unit (499a) has at least one unallocated available resource unit present in a second time period (P2); and
in response to the at least one unallocated available resource unit present in the second time period (P2), allocating the at least one unallocated available resource unit to the first member user device.

22. A user device (12, 530b, 540a, 540b, 630b, 640b, 830b, 840a, 840b, 930b, 940b, UE1∼UE8), comprising:
a transceiver circuit (11a, 12a);
a processor (11b, 12b), coupled to the transceiver and configured to:
control the transceiver circuit (11a, 12a) to transmit a request signal to a base station (11, 510, 520, 610, 620, 810, 820, 910, 920) through a first communication interface, wherein the request signal is configured to request to transmit a resource sensing result (300a, 401∼40N) of the user device (12, 530b, 540a, 540b, 630b, 640b, 830b, 840a, 840b, 930b, 940b, UE1∼UE8) to the base station (11, 510, 520, 610, 620, 810, 820, 910, 920) for a specific resource pool (300), and the first communication interface belongs to a first communication system;
control the transceiver circuit (11a, 12a) to receive a grant signal from the base station (11, 510, 520, 610, 620, 810, 820, 910, 920) in response to the request signal through the first communication interface;
control the transceiver circuit (11a, 12a) to transmit the resource sensing result (300a, 401∼40N) of the user device (12, 530b, 540a, 540b, 630b, 640b, 830b, 840a, 840b, 930b, 940b, UE1∼UE8) for the specific resource pool (300) to the base station (11, 510, 520, 610, 620, 810, 820, 910, 920) through the first communication interface so that the base station (11, 510, 520, 610, 620, 810, 820, 910, 920) accordingly estimates a specific resource sensing result (499, 710) associated with the specific resource pool (300);
control the transceiver circuit (11a, 12a) to receive the specific resource sensing result (499, 710) associated with the specific resource pool (300) from the base station (11, 510, 520, 610, 620, 810, 820, 910, 920) through the first communication interface, wherein the specific resource sensing result (499, 710) indicates at least one available resource unit (499a) in the specific resource pool (300); and
perform a sidelink transmission corresponding to a second communication system according to the at least one available resource unit (499a), wherein the first communication system is different from the second communication system, the user device (12, 530b, 540a, 540b, 630b, 640b, 830b, 840a, 840b, 930b, 940b, UE1∼UE8) operates in the second communication system, and the user device (12, 530b, 540a, 540b, 630b, 640b, 830b, 840a, 840b, 930b, 940b, UE1∼UE8) is located outside a coverage (510a, 520a, 610a, 620a, 810a, 820a, 910a, 920a) of another base station (11, 510, 520, 610, 620, 810, 820, 910, 920) applying the second communication system but located within a coverage (510a, 520a, 610a, 620a, 810a, 820a, 910a, 920a) of the base station (11, 510, 520, 610, 620, 810, 820, 910, 920) applying the first communication system.
